# EUROPÄISCHE PATENTSCHRIFT

(11) **EP 0 400 731 B1**
(45) Veröffentlichungstag und Bekanntmachung des Hinweises auf die Patenterteilung: **15.06.1994**
(21) Anmeldenummer: 90201317.6
(22) Anmeldetag: 25.05.1990
(51) Int. Cl.: D06F 39/08, F16B 21/09

(54) **Anordnung zur Lagerung einer Laugenpumpe in einem Gehäuse eines Haushaltgerätes**
Device for fixing a drain pump in a casing of a household appliance
Dispositif de fixation d'une pompe de vidange dans la carrosserie d'un appareil ménager

(30) Priorität: 30.05.1989 DE 3917474
(43) Veröffentlichungstag der Anmeldung: 05.12.1990
(73) Patentinhaber: Bauknecht Hausgeräte GmbH, D-70565 Stuttgart (DE); WHIRLPOOL EUROPE B.V., 5507 SK Veldhoven (NL)
(72) Erfinder: Lachenmayer, Rolf, D-7000 Stuttgart 50 (DE); Mäntele, Gerd, D-7068 Urbach (DE); Schüle, Kurt, D-7063 Welzheim (DE); Sperling, Horst, D-7060 Schorndorf-Miedelsbach (DE)
(74) Vertreter: Melio, Jan Dirk

(56) Entgegenhaltungen:
- DE-A- 2 157 590
- DE-B- 1 184 155
- US-A- 3 271 059

## Beschreibung

Die Erfindung bezieht sich auf eine Anordnung zur Lagerung einer Laugenpumpe in einem Gehäuse eines Haushaltgerätes, z.B. einer Waschmaschine, mit mindestens einem an der Laugenpumpe angebrachten eleastischen Befestigungselement, das unter Verformung in eine angepaßte Gehäuseöffnung einknöpfbar ausgebildet ist und dort einschnappt.

Eine derartige Anordnung ist z.B. durch die DE-OS 21 57 590 bekannt geworden. Bei der bekannten Bauart besteht die Motorlaugenpumpe aus einer Einheit, die von einem Elektromotor und einer Laugenpumpe gebildet wird und deren Schwerpunkt etwa in der Ebene des Motorblechpaketes liegt. Das Blechpaket wird unmittelbar in einem elastischen Ring, der z.B. aus Gummi besteht, gelagert. Die genannten Befestigungselemente sind an der Außenwand des Ringes angeordnet und durch Einknöpfen direkt mit dem Gehäuseboden verbindbar. Zur Befestigung der Laugenpumpe werden die elastischen Befestigungslemente in die angepaßten Gehäuseöffnungen gedrückt, wobei der Rand der Gehäuseöffnungen in die Schlitze der Befestigungselemente einrastet und sich somit eine Art Knopfverbindung ergibt. Die Fortsätze der Befestigungselemente bei der bekannten Bauart sind als Sicherungslappen ausgebildet und rasten beim Einfügen der Befestigungselemente in entsprechende Erweiterungen der Gehäuseöffnungen ein. Diese Sicherungslappen erstrecken sich in Einknöpfrichtung und besitzen an ihrem äußeren Ende eine hinter der Kante der Gehäuseöffnung verrastende Nase.

Der Erfindung liegt die Aufgabe zugrunde, eine Anordnung der eingangs genannten Art hinsichtlich einer schnelleren und einfacheren Montage und hinsichtlich einer zuverlässigen Lagerung zu verbessern. Diese Aufgabe wird gemäß der Erfindung dadurch gelöst, daß das Befestigungselement einen zungenförmig gestalteten Fortsatz aufweist, der entgegen der Einknöpfrichtung scharnierartig abbiegbar ausgebildet ist und an seiner äußeren Stirnseite eine Nut zur flächigen Aufnahme einer abgewinkelten Kante der Gehäuseöffnung aufweist. Die Befestigung der Laugenpumpe erfolgt derart, daß beim Einknöpfen des elastischen Verbindungselementes in die Gehäuseöffnung zunächst eine Kante der Gehäuseöffnung in den Schlitz des Befestigungselementes eingreift, wobei der gegenüberliegende Fortsatz durch die scharnierartige Verbindung mit dem Befestigungselement hochklappt. Damit kann die Laugenpumpe nach vorn in ihre Position geschoben werden, wobei die entsprechende Kante der Gehäuseöffnung voll in den Schlitz eingreift. Nach Erreichen dieser Endlage wird nunmehr der hochgeklappte Fortsatz des Befestigungselementes von Hand derart in die Gehäuseöffnung eingedrückt, daß die abgewinkelte Kante der Gehäuseöffnung in die stirnseitige Nut des Fortsatzes einschnappt. Eine derartige Montage ist einfach, schnell und problemlos durchzuführen. Durch das Eingreifen der nicht abgewinkelten Gehäuseöffnungskante in den Schlitz und durch das Eingreifen der abgewinkelten Gehäusekante in die Nut des Fortsatzes ergibt sich eine sichere Lagerung des Befestigungselementes in der Gehäuseöffnung und damit der Laugenpumpe in dem Gehäuse. Die allseitige Anlage des Befestigungselementes innerhalb der Gehäuseöffnung verhindert ein Verschieben des Befestigungselementes. Dazu dient insbesondere die flächige Anlage der abgewinkelten Gehäuseöffnungskante an der Stirnseite des Fortsatzes. Für den Fall, daß das Befestigungselement im Biegebereich des Fortsatzes eingekerbt ist, kann zur Erhöhung der Stabilität eine in die Kerbe ragende ortsfeste Rippe vorgesehen sein. Um die flächige Anlage der Gehäuseöffnung an dem Befestigungselement zu erhöhen, können in weiterer Ausgestaltung der Erfindung die der abgebogenen Gehäuseöffnungskante benachbarten beiden Gehäuseöffnungskanten ebenfalls rechtwinklig abgebogen sein. Eine derartige Ausbildung des Befestigungselementes einerseits und der anliegenden Kanten der Gehäuseöffnung andererseits bewirkt, daß bei Erschütterungen der Maschine, z.B. beim Transport, eine zuverlässige Lagerung der Laugenpumpe gewährleistet ist, ohne daß die Gefahr eines Lösens oder einer Lockerung der Laugenpumpe besteht. Neben den genannten Vorteilen der Sicherung gegen Transportschäden und der zuverlässigen Lagerung dient das einteilige elastische Befestigungselement zur Schwingungsentkopplung vom Gehäuse.

In Ausgestaltung der Erfindung ist das Befestigungselement über eine Distanzbuchse und mindestens eine Schraube an der Laugenpumpe befestigt. Auf diese Weise kann eine einfache Vormontage des Befestigungselementes an der Laugenpumpe ermöglicht werden. Eine ähnliche Art der Vormontage wird dadurch ermöglicht, daß in weiterer Ausgestaltung der Erfindung das Befestigungselement durch Aufknöpfen auf mindestens einen, an der Laugenpumpe angeordneten pilzförmigen Ansatz befestigt wird.

Der angeformte Fortsatz des Befestigungselementes ist in Einknöpfrichtung gesehen vorzugsweise stärker ausgeführt als das Befestigungselement selbst. Eine derartige massive Ausgestaltung des Fortsatzes ermöglicht mit der entsprechend größer ausgeführten, in der Nut des Fortsatzes liegenden abgewinkelten Kante der Gehäuseöffnung eine zuverlässige Halterung gegenüber Erschütterungen beim Transport. Wie oben erwähnt, ragt in die Kerbe im Bereich des Filmscharnieres eine ortsfeste Rippe, die in Ausgestaltung der Erfindung entweder an der Distanzbuchse oder an dem pilzförmigen Ansatz angeordnet ist. Durch eine derartige Ausführung, bei der eine Rippe in den kritischen labilen Bereich ragt, wird die durch die Verjüngung infolge des Scharnieres gebildete Instabilität wiedere beseitigt.

In der Zeichnung ist in den Fig. 1 bis 4 ein Ausführungsbeispiel des Gegenstandes gemäß der Erfindung schematisch dargestellt.
Fig. 1 zeigt eine Laugenpumpe in einer Seitenansicht,
Fig. 2 zeigt in einer Draufsicht eine Gehäuseöffnung zur Aufnahme eines Befestigungselementes und
Fig. 3 und 4 zeigen zwei Zustände des Befestigungselementes beim Einfügen in die Gehäuseöffnung.

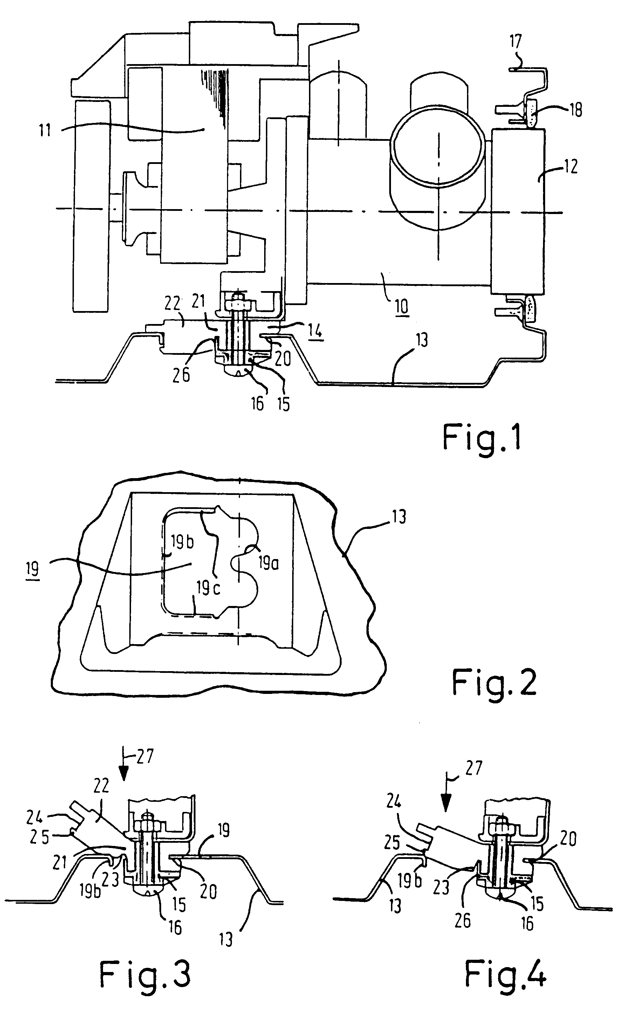

Fig. 1 zeigt in einer Seitenansicht eine Laugenpumpe 10 mit einem Elektromotor 11. Die an sich bekannte Laugenpumpe besitzt stirnseitig einen Deckel 12. Mit 13 ist ein Gehäuse eines nicht näher dargestellten elektrischen Gerätes, z.B. einer Waschmaschine dargestellt, in dem die Laugenpumpe befestigt ist. Die Befestigung erfolgt über ein an der Unterseite der Laugenpumpe 10 angeordnetes elastisches einteiliges Befestigungselement 14, das über eine Distanzhülse 15 und zwei Schrauben 16 am Gehäuse der Laugenpumpe befestigt ist. Als Zusatzfixierung ist die Laugenpumpe 10 an ihrer Vorderseite an einem Sockelumbug 17 über weitere dämpfende Gummipuffer 18 zentriert. Die Befestigung der Befestigungselemente 14 an der Laugenpumpe 10 erfolgt im Rahmen einer Vormontage.

Fig. 2 zeigt in einer Draufsicht und in einem Ausschnitt eine Gehäuseöffnung 19 im Gehäuse 13 der elektrischen Maschine. Die Gehäuseöffnung 19 besitzt an ihrer einen Seite eine geschwungene Gehäusekante 19a, die die beiden Schrauben 16 teilweise umgreift. Gegenüber der scharfkantigen Gehäuseöffnungskante 19a liegt eine abgewinkelte Gehäuseöffnungskante 19b. Auch die dieser benachbarten Gehäusekanten 19c sind abgewinkelt.

Fig. 3 und 4 zeigen eine Montage der Laugenpumpe 10 über das Befestigungselement 14 in der Gehäuseöffnung 19 des Gehäuses 13. Es ist jeweils nur der Bereich des Befestigungselementes mit der Gehäuseöffnung 19 dargestellt. Das Befestigungselement 14 besitzt an einer Stirnseite einen Schlitz 20 und an der gegenüberliegenden Seite einen über ein Filmscharnier 21 angeformten Fortsatz 22. Mit 23 ist eine Kerbe im Bereich des Scharniers 21 bezeichnet. Der Fortsatz besitzt stirnseitig eine Nut 24 mit einer Nase 25. Mit 26 ist eine an der Distanzhülse 15 ortsfest angeformte Rippe bezeichnet.

Zum Befestigen der Laugenpumpe 10 wird das an der Laugenpumpe befestigte Befestigungselement 14 zunächst mit seinem Schlitz 20 über die Kante 19a geschoben, wobei der Fortsatz 22 hochklappt. Danach wird die Laugenpumpe 10 nach vorn in Position geschoben (siehe Fig. 4) und der Fortsatz 22 in Einknöpfrichtung 27 in die Gehäuseöffnung 19 gedrückt. Dabei legt sich die abgewinkelte Gehäuseöffnungskante 19b in die Nut 24, wie in Fig. 1 dargestellt. Ferner ist die Kerbe 23 durch die Rippe 26 verschlossen.

## Patentansprüche

1. Anordnung zur Lagerung einer Laugenpumpe in einem Gehäuse eines Haushaltgerätes, z.B. einer Waschmaschine, mit mindestens einem an der Laugenpumpe angebrachten elastischen Befestigungselement, das unter Verformung in eine angepaßte Gehäuseöffnung einknöpfbar ist und dort einschnappt,
dadurch gekennzeichnet, daß das Befestigungselement einen zungenförmig gestalteten Fortsatz (22) aufweist, der entgegen der Einknöpfrichtung (27) scharnierartig abbiegbar ausgebildet ist und an seiner äußeren Stirnseite eine Nut (24) zur flächigen Aufnahme einer abgewinkelten Kante (19b) der Gehäuse-Öffnung (19) aufweist.

2. Anordnung nach Anspruch 1,
dadurch gekennzeichnet, daß das Befestigungselement (14) über eine Distanzbuchse (15) und mindestens eine Schraube (16) an der Laugenpumpe (10) befestigt ist.

3. Anordnung nach Anspruch 1,
dadurch gekennzeichnet, daß das Befestigungselement (14) durch Aufknöpfen auf mindestens einen, an der Laugenpumpe (10), angeordneten pilzförmigen Ansatz befestigt ist.

4. Anordnung nach einem der Ansprüche 1 bis 3,
dadurch gekennzeichnet, daß das Befestigungselement (14) im Biegebereich (21) des Fortsatzes (22) eingekerbt ist und daß eine in die Kerbe (23) ragende ortsfeste Rippe (26) vorgesehen ist.

5. Anordnung nach Anspruch 4,
dadurch gekennzeichnet, daß die Rippe (26) an der Distanzbuchse (15) oder an dem pilzförmigen Ansatz angeordnet ist.

6. Anordnung nach einem der Ansprüche 1 bis 5,
dadurch gekennzeichnet, daß das etwa rechteckförmige Befestigungselement (14) über eine Distanzhülse (15) und zwei Befestigungsschrauben (16) an der Laugenpumpe (10) befestigt ist, daß die in den Schlitz (20) ragende Gehäuse-Öffnungskante (19a) und der Schlitz (20) selbst einen geschwungenen, die Schrauben (16) teilweise umschließenden Verlauf aufweisen und daß die gegenüberliegende stirnseitige Nut (24) an dem Fortsatz (22) und die von der Nut (24) aufgenommene rechtwinklig abgebogene Gehäuse-Öffnungskante (19b) geradlinig verlaufend ausgebildet sind.

7. Anordnung nach einem der Ansprüche 1 bis 6,
dadurch gekennzeichnet, daß die der abgebogenen Gehäuse-Öffnungskante (19b) benachbarten beiden Gehäuse-Öffnungskanten (19c) ebenfalls rechtwinklig abgebogen sind.

8. Anordnung nach einem der Ansprüche 1 bis 7,
gekennzeichnet durch ein einziges, an der Unterseite der Laugenpumpe (10) angeordnetes, in eine Gehäuseöffnung (19) einknöpfbares Befestigungselement (14) und durch weitere, im Bereich eines Deckels (12) der Laugenpumpe (10) angeordnete, in einen Sockelumbug (17) einknöpfbare Gummipuffer (18) mit umlaufenden Ringnuten.

9. Anordnung nach einem der Ansprüche 1 bis 8,
dadurch gekennzeichnet, daß der Fortsatz (22) in Einknöpfrichtung (27) gesehen stärker ausgebildet ist als das Befestigungselement (14) im Bereich seiner Befestigungsschrauben (16).

## Claims

1. An arrangement for the mounting of a washing solution pump in a housing of a household appliance, e.g. a washing machine, with at least one elastic attachment element arranged on the washing solution pump, which element is able to be buttoned under deformation into a matching housing opening, and snaps in there, characterised in that the attachment element has a projection (22) constructed in a tongue shape, which is constructed so as to be able to be bent in the manner of a hinge against the direction of buttoning in, and has on its outer front face a groove (24) for the areal reception of an angled edge (19b) of the housing opening (19).

2. An arrangement according to Claim 1, characterised in that the attachment element (14) is attached to the washing solution pump (10) via a spacer bush (15) and at least one screw (16).

3. An arrangement according to Claim 1, characterised in that the attachment element (14) is attached by buttoning onto at least one mushroom-shaped extension arranged on the washing solution pump (10).

4. An arrangement according to one of Claims 1 to 3, characterised in that the attachment element (14) is notched in the bending region (21) of the projection (22) and that a fixed rib (26) is provided, projecting into the notch (23).

5. An arrangement according to Claim 4, characterised in that the rib (26) is arranged on the spacer bush (15) or on the mushroom-shaped extension.

6. An arrangement according to one of Claims 1 to 5, characterised in that the approximately rectangular attachment element (14) is attached to the washing solution pump via a spacer sleeve (15) and two attachment screws (16), that the housing opening edge (19a) projecting into the slit (20) and the slit (20) itself have a swung path partially surrounding the screws (16) and that the opposite groove (24) on the front side on the projection (22) and the housing opening edge (19), bent at right-angles and held by the groove (24), are constructed running in a straight line.

7. An arrangement according to one of Claims 1 to 6, characterised in that the two housing opening edges (19c) adjacent to the bent housing opening edge (19b) are likewise bent at right-angles.

8. An arrangement according to one of Claims 1 to 7, characterised by a single attachment element (14) arranged on the underside of the washing solution pump (10) and able to be buttoned into a housing opening (19), and by further rubber buffers (18) with encircling annular grooves, arranged in the region of a cover (12) of the washing solution pump (10) and able to be buttoned into a base bend (17).

9. An arrangement according to one of Claims 1 to 8, characterised in that the projection (22) , viewed in the buttoning-in direction (27), is constructed so as to be stronger than the attachment element (14) in the region of its attachment screws (16).

## Revendications

1. Dispositif de fixation d'une pompe de vidange dans un habillage d'un appareil ménager, par exemple d'une mactune à laver, comportant au moins un élément de fixation élastique monté sur la pompe de vidange, qui peut être emboîté par déformation dans une ouverture adéquate du habillage et y être encliqueté à la manière d'un bouton, caractérisé en ce que l'élément de fixation présente un prolongement (22) en forme de langue, qui est réalisé de manière à pouvoir être replié comme une charnière dans le sens inverse de la direction d'emboîtement (27), et comporte sur sa face extérieure une gorge (24) pour la réception à plat d'une arête (19b) repliée de l'ouverture (19) de l'habillage.

2. Dispositif selon la revendication 1, caractérisé en ce que l'élément de fixation (14) est fixé sur la pompe de vidange (10) au moyen d'une douille d'écartement (15) et d'au moins une vis (16).

3. Dispositif selon la revendication 1, caractérisé en ce que l'élément de fixation (14) est fixé par emboîtement sur au moins une embase en forme de champignon, agencée sur la pompe de vidange (10).

4. Dispositif selon l'une des revendications 1 à 3, caractérisé en ce que l'élément de fixation (14) présente une encoche dans la région de repli (21) du prolongement (22) et en ce qu'il est prévu une nervure (26) fixe en position qui fait saillie dans l'encoche (23).

5. Dispositif selon la revendication 4, caractérisé en ce que la nervure (26) est agencée sur la douille d'écartement (15) ou sur l'embase en forme de champignon.

6. Dispositif selon l'une des revendications 1 à 5, caractérisé en ce que l'élément de fixation (14), qui a approximativement la forme d'un rectangle, est fixé sur la pompe de vidange (10) au moyen d'une douille d'écartement (15) et de deux vis de fixation (16), en ce que l'arête (19a) de l'ouverture d'habillage faisant saillie dans la fente (20) et la fente (20) elle-même présentent un contour incurvé, entourant en partie les vis (16) et en ce que la gorge (24) opposée de la face frontale sur le prolongement (22) et l'arête (19b) d'ouverture repliée à angle droit et logée dans la gorge (24) sont réalisées en ligne droite.

7. Dispositif selon l'une des revendications 1 à 6, caractérisé en ce que les deux arêtes (19c) de l'ouverture d'habillage qui sont voisines de l'arête (19b) repliée sont également repliées à angle droit.

8. Dispositif selon l'une des revendications 1 à 7, caractérisé par un seul élément de fixation (14) agencé sur la face inférieure de la pompe de vidange (10) et qui peut s'emboîter dans une ouverture (19) et par d'autres butoirs en caoutchouc (18) avec gorges annulaires circonférentielles, les butoirs étant agencés dans la région d'un couvercle (12) de la pompe de vidange (10) et pouvant être enfoncés comme des boutons dans un repli du socle (17).

9. Dispositif selon l'une des revendications 1 à 8, caractérisé en ce que le prolongement (22), vu dans la direction d'emboîtement (27), est réalisé plus épais que l'élément de fixation (14) dans la région de ses vis de fixation (16).
